# FASCICULE DE BREVET EUROPEEN

(11) **EP 0 505 254 B1**
(45) Date de publication et mention de la délivrance du brevet: **19.01.1994**
(21) Numéro de dépôt: 92400688.5
(22) Date de dépôt: 16.03.1992
(51) Int. Cl.: B60K 17/356

(54) **Véhicule muni d'un système anti-patinage**
Fahrzeug mit Anti-Rutschsystem
Vehicle with anti-slip system

(30) Priorité: 19.03.1991 FR 9103347
(43) Date de publication de la demande: 23.09.1992
(73) Titulaire: POCLAIN HYDRAULICS, Société Anonyme, 60411 Verberie Cédex (FR)
(72) Inventeur: Heren, Jean A., F-60200 Compiègne (FR); Fontaine, Jacques P., F-60410 Verberie (FR); Fillion, Pierre, F-60700 Pontpoint (FR)
(74) Mandataire: Hoisnard, Jean-Claude

(56) Documents cités:
- EP-A- 0 224 144
- EP-A- 0 226 844
- DE-C- 3 644 138
- FR-A- 2 651 729
- GB-A- 2 221 516

## Description

FR-A-2 651 729 représente un véhicule muni d'une pluralité d'organes de déplacement attelés, certains au moins, chacun, à un moteur à fluide, et comportant un circuit d'alimentation en fluide sous pression comprenant, outre lesdits moteurs: une source de fluide sous pression raccordée à un conduit de refoulement de fluide; au moins deux conduits d'alimentation en fluide raccordés, chacun, d'une part, en parallèle, audit conduit de refoulement de fluide, d'autre part, à l'un particulier desdits moteurs à fluide, ceux-ci comportant chacun un conduit d'échappement de fluide; et, des dispositifs de mesure de la vitesse d'au moins ceux des organes de déplacement attelés auxdits moteurs particuliers; ainsi que les caractéristiques suivantes: a) des restrictions de valeurs réglables sont disposées sur l'un au moins des conduits d'alimentation en fluide et d'échappement de fluide desdits moteurs particuliers, une sur chaque conduit d'alimentation en fluide et/ou d'échappement de fluide, et sont munies de dispositifs individuels de réglage de leurs valeurs; b) une vitesse de référence d'organes de déplacement est choisie; c) un dispositif de traitement, que comporte le véhicule, compare chaque vitesse mesurée desdits organes de déplacement attelés aux moteurs particuliers à ladite vitesse de référence et génère, pour chaque moteur particulier, un signal de correction, le dispositif de traitement comportant autant de raccords de sortie, où sont disponibles les signaux de correction, qu'il y a de restrictions, chaque signal de correction correspondant à la vitesse mesurée d'un organe de déplacement attelé à l'un desdits moteurs particuliers; d) chaque raccord de sortie est relié au dispositif de réglage de la valeur de la restriction placée sur le conduit d'alimentation en fluide ou sur le conduit d'échappement de fluide du moteur particulier correspondant au signal de correction généré par le dispositif de traitement à partir de la vitesse mesurée de l'organe de déplacement attelé audit moteur particulier; ce véhicule comportant des organes de déplacement avant et arrière attelés, chacun à un desdits moteurs particuliers; et, une desdites restrictions de valeur réglable étant placée sur le conduit d'alimentation de chaque moteur particulier attelé aux organes de déplacement arrière.

Un véhicule peut, de manière banale, être déplacé sur des terrains en pente. Le véhicule comme défini ci-avant risque, lors d'une descente sur un terrain en pente, l'emballement des moteurs attelés à l'un des ses groupes d'organes de déplacement, avant ou arrière.

L'invention a essentiellement pour but de supprimer ce risque d'emballement, et ainsi de permettre au véhicule qui en est muni de se déplacer en toute sécurité quelque soit le terrain, y compris de descendre en marche avant, aussi bien qu'en marche arrière, un terrain en pente.

Pour se faire, selon l'invention: chaque moteur particulier est d'un type réversible; et, une desdites restrictions de valeur réglable est placée sur le conduit d'échappement de chaque moteur particulier attelé aux organes de déplacement avant.

Selon une réalisation préférée, ladite vitesse de référence est égale à la plus petite des vitesses mesurées des organes de déplacement du véhicule.

L'avantage principal de l'invention réside dans l'obtention à la fois de l'élimination du patinage des organes de déplacement d'un véhicule et de l'élimination de tous risques d'emballement des moteurs d'entraînement du véhicule. Il convient de remarquer la simplicité de la constitution de l'invention, un fonctionnement satisfaisant étant bien entendu obtenu, les moteurs à fluide pouvant en particulier avoir des cylindrées constantes, ou encore être à plusieurs cylindrées non continûment variables, et la ou les pompes n'ayant pas nécessairement non plus des cylindrées continûment variables, les constituants de l'invention pouvant donc être simples et peu coûteux.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est le schéma du circuit hydraulique d'alimentation des moteurs hydrauliques attelés aux roues motrices d'un véhicule à roues conforme à l'invention ;
- la figure 2 est une coupe schématique d'un constituant du circuit de la figure 1 ; et,
- la figure 3 complète le schéma de la figure 1 du circuit d'alimentation des moteurs hydrauliques du véhicule.

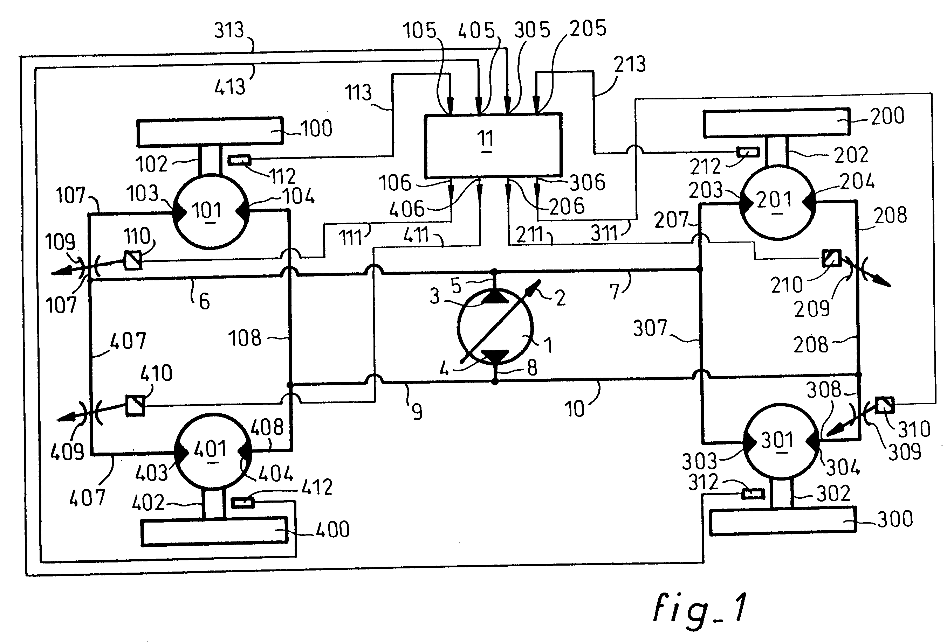

La figure 1 montre les quatre roues (ou ensembles de roues) motrices 100, 200, 300, 400 d'un véhicule et le circuit d'alimentation en fluide sous pression des moteurs hydrauliques réversibles 101, 201, 301, 401 attelés 102, 202, 302, 402 auxdites roues, respectivement. Les roues 100 et 400 sont des roues arrière, les roues 200 et 300 étant des roues avant.

Ce circuit d'alimentation en fluide comporte :
- lesdits moteurs hydrauliques 101, 201, 301, 401, qui sont d'un type réversible ;
- deux raccords principaux par moteur 103, 104 ; 203, 204 ; 303, 304 ; 403, 404, constituant à un instant donné l'un des raccords principaux 103, 203, 303, 403, le raccord d'alimentation en fluide du moteur, et l'autre raccord principal 104, 204, 304, 404, le raccord d'échappement du fluide hors du moteur, et réciproquement ;
- une pompe 1, à cylindrée continûment variable, à plateau inclinable 2, possédant deux raccords principaux 3, 4, l'un, 3, de ces raccords principaux constituant à un instant donné le raccord de refoulement de fluide sous pression, raccordé à un conduit de refoulement 5, auquel sont raccordés en parallèle deux conduits de liaison 6, 7, l'autre raccord principal 4 constituant le raccord d'aspiration de la pompe, raccordé à un conduit d'aspiration 8, auquel sont raccordés en parallèle deux autres conduits de liaison 9, 10, les raccords principaux 3, 4 constituant chacun le raccord de refoulement ou le raccord d'aspiration, et réciproquement ;
- un dispositif de traitement 11, qui comporte quatre raccords d'entrée 105, 205, 305, 405 et quatre raccords de sortie 106, 206, 306, 406 ;
- des conduits 107, 407 reliant les raccords principaux 103, 403 des moteurs 101, 401 au conduit de liaison 6 ;
- des conduits 207, 307 reliant les raccords principaux 203, 303 des moteurs 201, 301 au conduit de liaison 7 ;
- des conduits 108, 408 reliant les raccords principaux 104, 404 des moteurs 101, 401 au conduit de liaison 9 ;
- des conduits 208, 308 reliant les raccords principaux 204, 304 des moteurs 201, 301 au conduit de liaison 10 ;
- des restrictions 209 et 309, munies de dispositifs 210, 310 de réglage de leurs valeurs et disposées sur les conduits 208, 308, respectivement, qui constituent les conduits d'échappement de moteurs 201, 301 des roues avant, lorsque le raccord 3 constitue le raccord de refoulement de la pompe 1 ;
- des restrictions 109 et 409, munies de dispositifs 110, 410 de réglage de leurs valeurs et disposées sur les conduits 107, 407 respectivement, qui constituent les conduits d'alimentation de moteurs 101, 401 des roues arrière, lorsque le raccord 3 constitue le raccord de refoulement de la pompe 1 ;
- des fils électriques 111, 211, 311, 411, qui relient les raccords de sortie 106, 206, 306, 406 aux dispositifs de réglage 110, 210, 310, 410, respectivement ;
- des dispositifs 112, 212, 312, 412 de mesure de la vitesse des roues 100, 200, 300, 400, disposés à proximité desdites roues, respectivement ;
- des fils électriques 113, 213, 313, 413, qui relient les dispositifs de mesure de la vitesse 112, 212, 312, 412 aux raccords d'entrée 105, 205, 305, 405 du dispositif de traitement 11, respectivement.

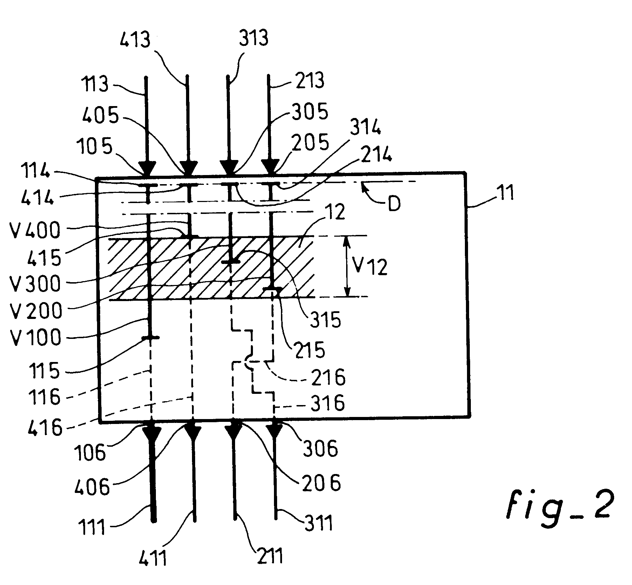

Les grandeurs (intensité de courant) V100, V200, V300, V400 mesurant, au moyen des dispositifs de mesure de vitesse 112, 212, 312, 412, les vitesses des roues 100, 200, 300, 400 peuvent être illustrées, dans le schéma de la figure 2, par des segments de droite V100, V200, V300, V400, proportionnels à ces grandeurs, parallèles, et ayant une première extrémité 114, 214, 314, 414 placée sur une même droite origine D. Dans l'exemple représenté, V400 est la plus petite de ces grandeurs. Le dispositif 11 définit, à partir de ladite grandeur (V400) la plus petite, une plage de neutralisation 12 de grandeur V12. Les deuxièmes extrémités, 215, 315 des segments V200, V300 sont contenues dans la plage 12, ou 115 du segment V100 dépasse ladite plage, la deuxième extrémité 415 du segment V400 étant sur la lisière amont de la plage 12. Le dispositif de traitement 11 sélectionne donc une grandeur V400 de référence, ici la plus petite des grandeurs mesurées, et compare à cette grandeur chacune des autres grandeurs V100, V200, V300, en neutralisant toutefois une plage 12. A chaque extrémité 115, 215, 315, 415, le dispositif de traitement fait correspondre 116, 216, 316, 416 un signal de sortie qui est disponible aux raccords de sortie 106, 206, 306, 406.

Pour celles, V200, V300, de ces grandeurs qui n'excèdent pas V400 de plus de la valeur V12 de la plage de neutralisation 12, le dispositif de traitement 11 transmet aux raccords de sortie correspondants 206, 306 un signal nul.

Pour celle, V100, de ces grandeurs qui est supérieure à la somme (V400 + V12) de la grandeur de référence V400 et de la grandeur V12 de la plage 12, le dispositif de traitement 11 transmet au raccord de sortie correspondant (106) un signal de sortie proportionnel à la différence (V100 - V400) entre la grandeur V100 en cours de traitement et la grandeur de référence V400.

Ce signal (ou ces signaux) de sortie est véhiculé par le fil 111 jusqu'au dispositif 110 de réglage de la valeur de la restriction 109. Ladite restriction 109 crée une perte de charge qui réduit la pression du fluide entre l'amont et l'aval de la restriction.

Lorsque le conduit 5 contient le fluide refoulé par la pompe 1, les conduits 108, 208, 308, 408 constituent des conduits d'échappement des moteurs hydrauliques 101, 201, 301, 401. Dans ce cas, les restrictions 209, 309 sont placées sur les conduits d'échappement 208, 308 et réalisent des contrepressions adaptées aux valeurs des vitesses mesurées par les dispositifs 212, 312, contrariant l'échappement du fluide hors de chaque moteur, donc susceptibles de provoquer un ralentissement de chaque moteur 201, 301, ainsi que de la roue qui y est attelée, ralentissement fonction du dépassement mesuré de la vitesse de ladite roue par rapport à la vitesse de référence. De manière analogue, les restrictions 109, 409 réalisent des étranglements réglables, ayant des valeurs adaptées aux valeurs des vitesses mesurées par les dispositifs 112, 412, susceptibles de contrarier l'admission du fluide sous pression d'alimentation des moteurs 101, 401, donc susceptibles de provoquer le ralentissement de chaque moteur 101, 401, ainsi que de la roue qui y est attelée, ralentissement fonction du dépassement mesuré de la vitesse de ladite roue par rapport à la vitesse de référence.

Lorsque le conduit 8 contient le fluide refoulé par la pompe 1, les conduits 108, 208, 308, 408 constituent les conduits d'alimentation des moteurs hydrauliques 101, 201, 301, 401. Dans ce cas, les restrictions 209, 309 réalisent une perte de charge, qui réduit la pression régnant dans les raccords principaux 204, 304 desdits moteurs 201, 301, donc réduisant le couple moteur de ces moteurs. Complémentairement, les restrictions 109, 409, en contrariant l'échappement du fluide hors des moteurs 101, 401, en provoquent également un ralentissement éventuel, ces divers ralentissements des moteurs 101, 201, 301, 401 étant réglés par les dispositifs de réglage 110, 220, 320, 410, eux-mêmes commandés par le dispositif de traitement 11 à partir des valeurs des vitesses mesurées par les dispositifs de mesures 112, 212, 312, 412.

Que le fluide sous pression d'alimentation des moteurs hydrauliques soit contenu dans le conduit 5, ou soit contenu dans le conduit 8, l'effet final est le même dans les deux cas.

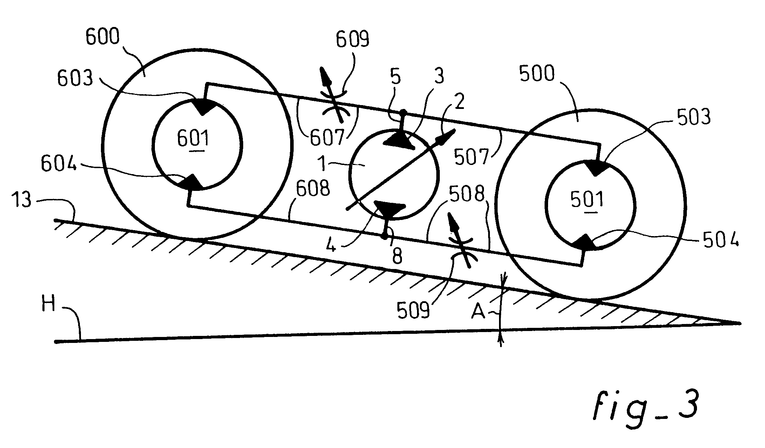

La figure 3 reprend le même schéma en le simplifiant pour faciliter la compréhension du fonctionnement, étant entendu que des dispositifs de mesure des vitesses analogues aux dispositifs 112, 212, 312, 412, un dispositif de traitement analogue au dispositif 11, et des dispositifs de réglage analogues aux dispositifs 110, 210, 310, 410, sont prévus, bien que non représentés, et, en ce qui concerne les dispositifs de mesure des vitesses de rotation des roues, sont associés aux roues avant 500 et arrière 600, et, en ce qui concerne les dispositifs de réglage des valeurs des restrictions, sont associés aux restrictions 509 et 609, respectivement.

Le schéma de la figure 3 représente donc les roues avant 500 et arrière 600 du véhicule placé sur un sol 13 incliné d'un angle A par rapport à la direction horizontale H, les roues avant 500 étant placées à un niveau inférieur à celui des roues arrière 600, le véhicule descendant la pente en marche avant.

Dans ce schéma, une pompe 1 à cylindrée continûment variable, et à plateau inclinable 2, a deux raccords 3, 4 auxquels sont reliés des conduits 5 et 8. Ici, il est supposé que le conduit 5 constitue le conduit de refoulement de la pompe 1. Des moteurs hydrauliques 501, 601 sont attelés aux roues 500, 600 et comportent chacun deux raccords principaux 503, 504 et 603, 604, respectivement. Des conduits 507, 607 relient les raccords principaux 503, 603 au conduit 5 ; des conduits 508, 608 relient les raccords principaux 504, 604 au conduit 8. Des restrictions 509, 609, de valeurs réglables, analogues aux restrictions 109, 209, 309, 409 et raccordées de manière semblable à un dispositif de traitement analogue au dispositif 11, sont placées, les unes 509, sur les conduits 508, qui constituent dans le cas présent les conduits d'échappement des moteurs 501, les autres 609, sur les conduits 607, qui constituent ici les conduits d'alimentation des moteurs 601. Les constituants du schéma des figures 1 et 2 se retrouvent ici, y compris les dispositifs de mesure de vitesse associés à chaque roue, et les dispositifs de réglage des valeurs des diverses restrictions, les branchements étant analogues.

Dans le schéma de la figure 3, une restriction 509 est donc disposée sur le conduit d'échappement du moteur 501 de chaque roue avant 500, et est apte à réaliser une contrepression contrariant l'échappement du fluide hors dudit moteur 501.

Le véhicule pourrait également se trouver dans la configuration dans laquelle il descendrait la pente en marche arrière, les roues arrière 600 étant alors placées à un niveau inférieur à celui des roues avant 500. Dans cette configuration, le conduit de refoulement de la pompe 1 est constitué par le conduit 8. Les conduits 508, 608 constituent les conduits d'alimentation des moteurs hydrauliques 501, 601 et la restriction 609 est donc placée sur le conduit d'échappement 607 du moteur 601. On retrouve une configuration analogue à celle décrite en premier et effectivement représentée sur la figure 3.

Ainsi, lorsque le véhicule descend la pente, que ce soit en marche avant ou en marche arrière, des restrictions 509 ou 609 sont à chaque fois placées sur les conduits d'échappement d'un des groupes de moteurs 501 ou 601, respectivement.

Il convient maintenant, avant de décrire les fonctionnements obtenus des véhicules précédemment décrits, de formuler les remarques suivantes :
- le dispositif de traitement 11 est généralement constitué par une machine calculatrice associée à des circuits électroniques, apte notamment à réaliser le choix d'une vitesse de référence éventuellement différente de la plus petite V400 des vitesses ; la vitesse de référence choisie peut, par exemple, être constituée par la moyenne de plusieurs autres vitesses mesurées ; de même, la plage V12 peut avoir toute valeur désirée ;
- les pompes 1 représentées sont des pompes à cylindrées variables : cette disposition particulière n'est cependant pas obligatoire, les schémas fonctionnant également avec des pompes à cylindrée constante ;
- les moteurs 101, 201, 301, 401, 501, 601 représentés sont des moteurs à cylindrées constantes, à une seule cylindrée : de plus en plus fréquemment, les transmissions hydrostatiques utilisent des moteurs à plusieurs cylindrées, chacune constante, et l'invention s'applique naturellement aux véhicules utilisant de tels moteurs ;
- les schémas décrits représentent exclusivement des roues "dites motrices", attelées chacune à un moteur hydraulique d'entraînement ; certains véhicules peuvent posséder également des roues non motrices, qui peuvent être associées elles-mêmes à des dispositifs de mesure de vitesse reliés au dispositif de traitement 11 et ces véhicules sont naturellement aptes à recevoir application de l'invention ;
- il est même souvent opportun, dans un système visant à supprimer le patinage des roues motrices, de choisir la vitesse de référence, soit parmi les vitesses de roues non motrices, soit en tenant compte des vitesses de roues non motrices ;
- enfin, si les réalisations décrites se rapportent à des véhicules munis de roues, l'application de l'invention à des véhicules comportant des chenilles est possible, même si le risque de patinage est plus grand avec les véhicules à roues ; il convient donc de parler de manière générale des véhicules munis d'organes de déplacement.

Le véhicule des figures 1 et 2 fonctionne d'abord de manière classique, comme si les restrictions 109, 209, 309, 409 n'avaient pas été prévues. Il est donc admis qu'initialement ces restrictions sont entièrement ouvertes et ne forment aucun obstacle aux écoulements du fluide. Les moteurs 101, 201, 301, 401 sont alimentés en parallèle par le fluide refoulé par la pompe 1, tous à la même pression et tournent tous à une même vitesse. Les extrémités 115, 215, 315, 415 des segments V100, V200, V300, V400 sont toutes contenues dans ou sur la lisière de la plage 12, de sorte qu'aucun signal non nul ne parvient aux divers raccords de sortie 106, 206, 306, 406 du dispositif de traitement 11, et que, par conséquent, aucun ordre de réglage des valeurs des restrictions 109, 209, 309, 409 ne parvient aux organes de réglage 110, 210, 310, 410, lesdites restrictions restant entièrement ouvertes.

Lorsque l'une (ou plusieurs) des roues, telle que la roue 100, commence à patiner du fait que le couple moteur du moteur correspondant 101 qui y est attelé est excessif compte tenu de l'adhérence de ladite roue sur le sol, la vitesse de cette roue augmente par rapport à celles des roues qui ne patinent pas, et la grandeur V100 dépasse la plage 12. Le dispositif de traitement 11 génère un signal de correction, fonction du programme de calcul qu'il possède, signal de correction qui, véhiculé jusqu'au dispositif de réglage 110 de la valeur de la restriction 109, commande la modification de la valeur de cette restriction qui, en l'espèce, réduit l'alimentation dans la partie du conduit d'alimentation 107 reliée au raccord 103 du moteur hydraulique 101 jusqu'à ce que le couple dudit moteur hydraulique redevienne égal à la valeur pour laquelle le patinage de la roue 100 est supprimé.

L'effet de diminution du couple du moteur attelé à la roue commençant à patiner est le même lorsque la restriction est placée sur le conduit d'échappement au lieu d'être placée sur le conduit d'alimentation dudit moteur hydraulique. A noter d'ailleurs que, selon les sens de refoulement de la pompe 1, les conduits 108, 208, 308, 408 constituent, selon le cas, les conduits d'échappement ou les conduits d'alimentation des moteurs hydrauliques, ceci tout au moins lorsque le véhicule se déplace sur un sol sensiblement horizontal.

Lorsque le véhicule se déplace sur un sol en pente, tel que représenté sur la figure 3, la force de gravité tend à entraîner le véhicule vers le bas, si bien qu'il apparaît souvent judicieux de placer une restriction sur le conduit d'échappement de l'un au moins des moteurs hydrauliques, afin de freiner la roue correspondante, et par suite le véhicule lui-même.

En plaçant les restrictions 509, 609, tel que cela est représenté sur la figure 3, quelle que soit la position du véhicule sur le sol 13, que le véhicule descende en marche avant ou en marche arrière, dans chaque cas, les conduits d'échappement de certains des moteurs hydrauliques sont munis d'une restriction : ce sont les conduits 508 et les restrictions 509, lorsque le véhicule descend en marche avant (configuration représentée) ; ce sont les conduits 607 et les restrictions 609, lorsque le véhicule descend en marche arrière (configuration décrite, mais non représentée).

Par ailleurs, en se reportant à la configuration représentée sur la figure 3, il peut être observé que dans le cas où la roue arrière 600 aurait tendance à patiner pendant la descente du véhicule, il y aurait le risque d'un changement de son sens de rotation : le moteur hydraulique 601, au lieu de continuer à être alimenté en fluide sous pression par l'intermédiaire de son raccord principal 603, risque de l'être par l'intermédiaire de son raccord principal 604. La présence de la restriction 609 sur le conduit 607, la restriction 509 étant déjà prévue sur le conduit 508, suffit à l'obtention d'un fonctionnement satisfaisant.

L'invention n'est pas limitée aux réalisations décrites, mais en couvre au contraire toutes les variantes qui pourraient leur être apportées sans sortir du cadre des revendications.

## Revendications

1. Véhicule muni d'une pluralité d'organes de déplacement (100, 200, 300, 400) attelés, certains au moins, chacun, à un moteur à fluide (101, 201, 301, 401), et comportant un circuit d'alimentation en fluide sous pression comprenant, outre lesdits moteurs :
- une source de fluide sous pression (1) raccordée à un conduit de refoulement de fluide (5) ;
- au moins deux conduits d'alimentation en fluide (107, 207, 307, 407) raccordés, chacun, d'une part, en parallèle, audit conduit de refoulement de fluide (5) ; d'autre part, à l'un (101, 201, 301, 401) particulier desdits moteurs à fluide, ceux-ci comportant chacun un conduit d'échappement de fluide (108, 208, 308, 408) ;
- des dispositifs (112, 212, 312, 412) de mesure de la vitesse d'au moins ceux des organes de déplacement attelés auxdits moteurs particuliers ;
- des restrictions (109, 209, 309, 409) de valeurs réglables, qui sont disposées sur l'un au moins des conduits d'alimentation en fluide et d'échappement de fluide desdits moteurs particuliers, une sur chaque conduit d'alimentation en fluide et/ou d'échappement de fluide, et qui sont munies de dispositifs individuels (110, 210, 310, 410) de réglage de leurs valeurs ;
- une vitesse de référence (V400) d'organes de déplacement étant choisie ;
- un dispositif de traitement (11), que comporte le véhicule, qui compare chaque vitesse mesurée (V100, V200, V300) desdits organes de déplacement attelés aux moteurs particuliers à ladite vitesse de référence (V400) et qui génère, pour chaque moteur particulier,un signal de correction, le dispositif de traitement comportant autant de raccords de sortie (106, 206, 306, 406), où sont disponibles les signaux de correction, qu'il y a des restrictions (109, 209, 309, 409), chaque signal de correction correspondant à la vitesse mesurée d'un organe de déplacement attelé à l'un desdits moteurs particuliers ;
cependant que chaque raccord de sortie est relié (111, 211, 311, 411) au dispositif de réglage (110, 210, 310, 410) de la valeur de la restriction (109, 209, 309, 409) placée sur le conduit d'alimentation en fluide ou sur le conduit d'échappement de fluide du moteur particulier (101) correspondant au signal de correction généré (116) par le dispositif de traitement (11) à partir de la vitesse mesurée (V100) de l'organe de déplacement (100) attelé audit moteur particulier (101); ce véhicule comportant des organes de déplacement avant (200, 300) et arrière (100, 400) attelés, chacun à un (201, 301; 101, 401) desdits moteurs particuliers ; et une desdites restrictions de valeur réglable (109, 409) étant placée sur le conduit d'alimentation (107, 407) de chaque moteur particulier (101, 401) attelé aux organes de déplacement arrière (100, 400),
caractérisé en ce que:
A) chaque moteur particulier est d'un type réversible;
B) une desdites restrictions de valeur réglable (209, 309) est placée sur le conduit d'échappement (208, 308) de chaque moteur particulier (201, 301) attelé aux organes de déplacement avant (200, 300).

2. Véhicule selon la revendication 1,
caractérisé en ce que ladite vitesse de référence (V400) est égale à la plus petite des vitesses mesurées (V100, V200, V300, V400) des organes de déplacement (100, 200, 300, 400) du véhicule.

## Patentansprüche

1. Fahrzeug, das mit einer Vielzahl von Fortbewegungselementen (100, 200, 300, 400) ausgerüstet ist, von denen wenigstens einige jeweils mit einem Fluidmotor (101, 201, 301, 401) verbunden sind, und das einen Druckfluid-Versorgungskreislauf aufweist, der außer den besagten Motoren umfaßt:
- eine Druckfluidquelle (1), an die eine Fluidarbeitsleitung (5) angeschlossen ist;
- wenigstens zwei Fluidversorgungsleitungen (107, 207, 307, 407), von denen jede auf der einen Seite parallel an der Fluidarbeitsleitung (5) und auf der anderen Seite an einen einzelnen (101, 201, 301, 401) der Fluidmotoren angeschlossen ist, welche alle eine Fluidrückführleitung (108, 208, 308, 408) besitzen;
- Vorrichtungen (112, 212, 312, 412) zur Messung der Geschwindigkeit wenigstens der Fortbewegungselemente, welche mit den einzelnen Motoren verbunden sind;
- einstellbare Drosseln (109, 209, 309, 409), die wenigstens in einer der Versorgungsleitungen und Rückführleitungen der einzelnen Motoren eingebaut sind, und zwar jeweils eine in der Versorgungsleitung und/oder der Rückführleitung, und die mit individuellen Vorrichtungen (110, 210, 310, 410) zur Regelung ihrer Parameter versehen sind;
- eine vorgegebene Referenzgeschwindigkeit (V400) der Fortbewegungselemente;
- eine Bedienungseinrichtung (11) im Fahrzeug, die jede gemessene Geschwindigkeit (V100, V200, V300) der besagten mit den einzelnen Motoren verbundenen Fortbewegungselemente mit der besagten Referenzgeschwindigkeit (V400) vergleicht, und die für jeden einzelnen Motor ein Korrektursignal erzeugt, wobei die Bedienungseinrichtung so viele Ausgangsanschlüsse (106, 206, 306, 406) umfaßt, an denen die Korrektursignale anliegen, wie es Drosseln (109, 209, 309, 409) gibt, wobei jedes Korrektursignal der gemessenen Geschwindigkeit eines der mit einem der besagten einzelnen Motoren verbundenen Fortbewegungselementen entspricht;
- während jeder Ausgangsanschluß (111, 211, 311, 411) mit der Regeleinrichtung (110, 210, 310, 410) für die Drosselventileinstellung (109, 209, 309, 409) verbunden ist, das in der Fluidversorgungsleitung oder der Fluidrückführleitung des einzelnen Motors (101) eingebaut ist, die dem Korrektursignal (116) entspricht, das durch die Bedienungseinheit (11) aufgrund der gemessenen Geschwindigkeit (V100) der mit dem einzelnen Motor (101) verbundenen Fortbewegungselemente (100) erzeugt wurde;
- wobei das Fahrzeug vordere Fortbewegungselemente (200, 300) und hintere Fortbewegungselemente (100, 400) umfaßt, die jedes an einen (201, 301, 101, 401) der besagten einzelnen Motoren angeschlossen ist; und wobei eines der besagten regelbaren Drosselventile (109, 409) in die Versorgungsleitung (107, 407) jedes einzelnen Motors (101, 401) eingebaut ist, der mit den Fortbewegungselementen (100, 400) verbunden ist,
**dadurch gekennzeichnet**, daß
A) jeder einzelne Motor umsteuerbar ist;
B) eines der besagten regelbaren Drosselventile (209, 309) in der Rückführleitung (208, 308) jedes einzelnen Motors (201, 301) eingebaut ist, der mit den vorderen Fortbewegungselementen (200, 300) verbunden ist.

2. Fahrzeug nach Anspruch 1,
dadurch gekennzeichnet,
daß die besagte Referenzgeschwindigkeit (V400) gleich der kleinsten gemessenen Geschwindigkeit (V100, V200, V300, V400) der Fortbewegungselemente (100, 200, 300, 400) des Fahrzeugs ist.

## Claims

1. Vehicle equipped with a plurality of displacement members (100, 200, 300, 400), at least certain of which being coupled to a fluid motor (101, 201, 301, 401) and comprising a pressurized fluid supply circuit comprising, in addition to said motors:
- a source of pressurized fluid (1) connected to a fluid delivery conduit (5);
- at least two fluid supply conduits (107, 207, 307, 407) each connected, on the one hand, in parallel, to said fluid delivery conduit (5); on the other hand, to a particular one (101, 201, 301, 401) of said fluid motors, the latter each comprising a fluid exhaust conduit (108, 208, 308, 408);
- devices (112, 212, 312, 412) for measuring the speed of at least those of the displacement members coupled to said particular motors;
- restrictions (109, 209, 309, 409) of adjustable values which are disposed on at least one of the fluid supply and fluid exhaust conduits of said particular motors, one on each fluid supply and/or fluid exhaust conduit, and are provided with individual devices (110, 210, 310, 410) for adjusting their values;
- a reference speed (V400) of displacement members is selected;
- a processing device (11), incorporated in the vehicle, which compares each measured speed (V100, V200, V300) of said displacement members coupled to the particular motors, with said reference speed (V400) and which generates, for each particular motor, a correction signal, the processing device comprising as many output connections (106, 206, 306, 406), where the correction signals are available, as there are restrictions (109, 209, 309, 409), each correction signal corresponding to the measured speed of a displacement member coupled to one of said particular motors;
- while each outlet connection is connected (111, 211, 311, 411) to the device (110, 210, 310, 410) for adjusting the value of the restriction (109, 209, 309, 409) placed on either the fluid supply conduit or on the fluid exhaust conduit of the particular motor (101) corresponding to the correction signal generated (116) by the processing device (11) from the measured speed (V100) of the displacement member (100) coupled to said particular motor (101); said vehicle comprising front (220, 300) and rear (100, 400) displacement members, each coupled to one (201, 301; 101, 401) of said particular motors; and one of said restrictions of adjustable value (109, 409) being placed on the supply conduit (107, 407) of each particular motor (101, 401) coupled to the rear displacement members (100, 400),
characterized in that:
A) each particular motor is of a reversible type;
B) one of said restrictions of adjustable value (209, 309) is placed on the exhaust conduit (208, 308) of each particular motor (201, 301) coupled to the front displacement members (200, 300).

2. Vehicle according to claim 1,
characterized in that said reference speed (V400) is equal to the lowest of the measured speeds (V100, V200, V300, V400) of the displacement members (100, 200, 300, 400) of the vehicle.
